(19) Europäisches Patentamt
European Patent Office
Office européen des brevets

(11) EP 2 669 331 A1

(12) **EUROPEAN PATENT APPLICATION**
published in accordance with Art. 153(4) EPC

(43) Date of publication:
**04.12.2013 Bulletin 2013/49**

(21) Application number: **12739632.3**

(22) Date of filing: **20.01.2012**

(51) Int Cl.:
***C08L 63/00** (2006.01)* ***C08J 5/24** (2006.01)*
***C08L 21/00** (2006.01)* ***C08L 77/00** (2006.01)*

(86) International application number:
**PCT/JP2012/051189**

(87) International publication number:
**WO 2012/102201 (02.08.2012 Gazette 2012/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2011 JP 2011016277**

(71) Applicant: **Toray Industries, Inc.**
**Tokyo 103-8666 (JP)**

(72) Inventors:
- **GOTO, Yuko**
  **Aichi 455-8502 (JP)**
- **TOMIOKA, Nobuyuki**
  **Aichi 455-8502 (JP)**
- **ECHIGO, Yuji**
  **Aichi 455-8502 (JP)**
- **SAKATA, Hiroaki**
  **Aichi 455-8502 (JP)**
- **HONDA, Shiro**
  **Aichi 455-8502 (JP)**
- **TAIKO, Hiroshi**
  **455-8502 (JP)**

(74) Representative: **Webster, Jeremy Mark et al**
**Mewburn Ellis LLP**
**33 Gutter Lane**
**London**
**EC2V 8AS (GB)**

# (54) EPOXY RESIN COMPOSITION FOR FIBER-REINFORCED COMPOSITE MATERIALS, PREPREG, AND FIBER-REINFORCED COMPOSITE MATERIAL

(57) Provided are: a fiber-reinforced composite material which has mode I interlaminar fracture toughness, mode II interlaminar fracture toughness and compressive strength under heat and humidity conditions at the same time; an epoxy resin composition for obtaining the fiber-reinforced composite material; and a prepreg which is obtained using the epoxy resin composition. An epoxy resin composition for fiber-reinforced composite materials, which contains at least the following constituent elements (A), (B), (C) and(D). (A) An epoxy resin (B) Resin particles that satisfy the following conditions (bl)-(b3) and are insoluble in an epoxy resin (b1) The particle size distribution index is 1.0-1.8. (b2) The particle sphericity is 90 or more. (b3) The glass transition temperature of the particles is 80-180°C. (C) At least one elastomer component that is selected from among block copolymers containing a block having a glass transition temperature of 20°C or less and rubber particles (D) An epoxy resin curing agent

EP 2 669 331 A1

## Description

Technical field

The present invention relates to an epoxy resin composition for fiber-reinforced composite materials production serving to provide a fiber-reinforced composite material having high compressive strength after impact, interlaminar toughness, and compressive strength under heat and humidity conditions, and a prepreg and a fiber-reinforced composite material produced therefrom.

Background art

High in specific strength and specific rigidity, carbon fiber-reinforced composite materials are useful and have been used in a wide variety of applications including aircraft structure members, windmill blades, automobiles' exterior plates, and computer parts such as IC trays and notebook computer housing, and demands for them have been increasing every year.

A carbon fiber-reinforced composite material has an heterogeneous materials produced by molding a prepreg consisting essentially of carbon fibers, i.e., reinforcement fibers, and a matrix resin, and accordingly, there are large differences between the physical properties in the direction of the aligned reinforcement fibers and those in other directions. For instance, it is known that the interlaminar toughness, which represents the resistance to interlaminar fracture of the reinforcement fiber layers, cannot be improved drastically by simply increasing the strength of the reinforcement fibers. In particular, carbon fiber-reinforced composite materials containing a thermosetting resin as matrix resin are generally liable to be fractured easily by a stress caused in a direction other than the alignment direction of the reinforcement fibers, reflecting the low toughness of the matrix resin. In this respect, various techniques have been proposed aiming to provide composite materials that have improved physical properties, including interlaminar toughness, to resist a stress in directions other than the alignment direction of the reinforcement fibers while maintaining high compressive strength in the fiber direction under high temperature and high humidity conditions, which is required for aircraft structural members.

Furthermore, fiber-reinforced composite materials have recently been applied to an increased range of aircraft structural members, and fiber-reinforced composite materials are also in wider use for windmill blades and various turbines designed to improve power generation efficiency and energy conversion efficiency. Studies have been made to provide thick members produced from prepregs consisting of an increased number of layers as well as members having three-dimensionally curved surfaces. If such a thick member or curved-surfaced member suffers from a load, i.e., tensile or compressive stress, the prepreg fiber layers may receive a peeling stress generated in an antiplane direction, which can cause opening-mode interlayer cracks. As these cracks expand, the overall strength and rigidity of the member can deteriorate, possibly leading to destruction of the entire member. Opening-mode, that is, mode I, interlaminar toughness is necessary to resist this stress.

Compared to this, there is a proposal of a technique that uses high-toughness particle material of, for example, polyamide provided in regions between fiber layers so that the mode II interlaminar toughness will be increased to decrease the degree of damage that can be caused in falling weight impact test for the surface (see patent document 1). Even this technique, however, cannot serve adequately in the case of mode I interlaminar toughness.

Apart from this, a material with high interlaminar shear strength under heat and humidity conditions as well as high impact resistance has been disclosed in which sphericity particles of polyamide resin, namely, Grilamid, is provided in regions between fiber layers while an elastomer, block copolymer, or the lilke, such as butadiene-acrylonitrile copolymer, is used to increase the toughness of the matrix resin (see patent document 2). Even this technique, however, cannot serve adequately to achieve both high mode I interlaminar toughness and high mode II interlaminar toughness at the same time. There is another proposal that discloses a material with both high impact resistance and high tensile strength in which polyamide particles containing nylon 6 and nylon 12 are provided in regions between fiber layers while thermoplastic resin such as polyethersulfone is used to increase the toughness of the matrix resin (see patent document 3). Even this technique, however, cannot serve adequately to achieve high mode I interlaminar toughness and high compressive strength in the fiber direction under heat and humidity conditions.

Prior art documents

Patent documents

Patent document 1: U.S. Patent No. 5,028,478 (specification)

Patent document 2: Japanese Unexamined Patent Publication (Kokai) No. 2010-95557
Patent document 3: Published Japanese Translation of PCT International Publication JP 2010-525102

Summary of the invention

Problems to be solved by the invention

An object of the present invention is to provide an epoxy resin composition serving to produce a fiber-reinforced composite material having high mode I interlaminar toughness and high mode II interlaminar toughness as well as compressive strength under heat and humidity conditions, and a prepreg and a fiber-reinforced composite material produced therefrom.

Means of solving the problems

The present invention adopts any of the following constitutions to meet the above object. Epoxy resin composition for fiber-reinforced composite material production, including at least the following components [A], [B], [C], and [D]:

[A] epoxy,
[B] resin particles insoluble in epoxy resin and meeting the following requirements, (b 1) to (b3):

(b1) the particles have a diameter distribution index of 1.0 to 1.8,
(b2) the particles have a sphericity of 90 or more, and
(b3) the particles have a glass transition temperature of 80 to 180°C,

[C] at least one elastomer component selected from the group consisting of rubber particles and block copolymers containing a block with a glass transition temperature of 20°C or less,
[D] epoxy resin curing agent.

In a preferred embodiment of the epoxy resin composition for fiber-reinforced composite material production according to the present invention, the above-mentioned epoxy resin [A] contains a polyfunctional amine type epoxy resin and/or a bifunctional amine type epoxy.
In another preferred embodiment of the epoxy resin composition for fiber-reinforced composite material production according to the present invention, resin particles [B] have an average particle diameter of 8 to 35 μm, or resin particles [B] are particles of polyamide having a chemical structure as represented by general formula (1).
[Chemical compound 1]

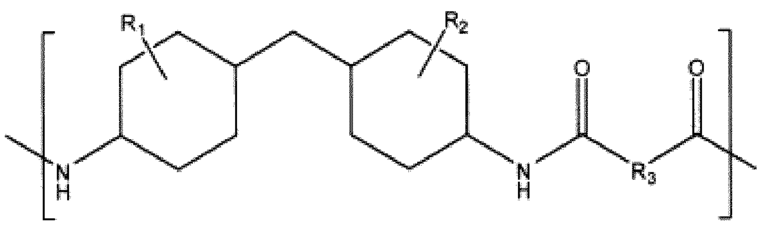

(1)

(In the formula, $R_1$ and $R_2$ represent a hydrogen atom, an alkyl group containing 1 to 8 carbon atoms, or a halogen atom, and may be either identical to or different from each other. In the formula, $R_3$ represents a methylene group containing 1 to 20 carbon atoms, or a phenylene group).
In another preferred embodiment of the epoxy resin composition for fiber-reinforced composite material production according to the present invention, epoxy resin curing agent [D] is an aromatic amine, specifically, diaminodiphenyl sulfone, a derivative thereof, or an isomer thereof.
In another preferred embodiment of the epoxy resin composition for fiber-reinforced composite material production according to the present invention, elastomer component [C] is at least one block copolymer selected from the group consisting of those having a structure of S-B-M, B-M, or M-B-M.
(Here, each of the aforementioned blocks is connected to an adjacent one via a covalent bond, or via an intermediary

molecule that is connected to the block via a covalent bond and connected to the adjacent one via another covalent bond. Block M includes a homopolymer of polymethyl methacrylate or a copolymer in which at least 50 wt% is accounted for by methyl methacrylate, and block B is incompatible with block M and has a glass transition temperature of 20°C or less. Block S is incompatible with blocks B and M and has a glass transition temperature that is higher than the glass transition temperature of block B.))

According to the present invention, furthermore, the aforementioned epoxy resin composition for fiber-reinforced composite material production can be impregnated into reinforcement fibers to produce prepreg, and the epoxy resin composition for fiber-reinforced composite material production or the prepreg can be cured to produce a fiber-reinforced composite material.

Effect of the invention

According to the present invention, it is possible to provide a fiber-reinforced composite material having high mode I interlaminar toughness, high mode II interlaminar toughness, and compressive strength under heat and humidity conditions, as well as an epoxy resin composition for fiber-reinforced composite material production and a prepreg that serve for production thereof.

Description of embodiments

Described in detail below are the epoxy resin composition for fiber-reinforced composite material production, prepreg, and fiber-reinforced composite material according to the present invention.

Epoxy resin [A] designed for the present invention is a compound having a plurality of epoxy groups in one molecule.

Specific examples of epoxy resin [A] to be used for the present invention include aromatic glycidyl ethers produced from a phenol with a plurality of hydroxyl groups, aliphatic glycidyl ethers produced from alcohol with a plurality of hydroxyl groups, glycidyl amines produced from amine, glycidyl esters produced from a carboxylic acid with a plurality of carboxyl groups, and epoxy resin with an oxirane ring.

In particular, glycidyl amine type epoxy resins are preferred because they are low in viscosity and able to impregnate reinforcement fibers easily and accordingly can serve to produce fiber-reinforced composite materials with good mechanical characteristics including heat resistance and elastic modulus. Such glycidyl amine type epoxy resins can be roughly divided into two groups: polyfunctional amine type epoxy resins and bifunctional amine type epoxy resins.

A polyfunctional amine type epoxy resin is an amine type epoxy containing three or more epoxy groups in one epoxy resin molecule. Such polyfunctional amine type epoxy resins include, for instance, tetraglycidyl diaminodiphenyl methane, triglycidyl aminophenol, tetraglycidyl xylylene diamine, and diglycidyl aniline, as well as halogen-substituted compounds, alkyl-substituted compounds, aralkyl-substituted compounds, allyl-substituted compounds, alkoxy-substituted compounds, aralkoxy-substituted compounds, allyloxy-substituted compounds, and hydrogenated compounds thereof.

There are no specific limitations on the polyfunctional amine type epoxy resin to be used, but preferred ones include tetraglycidyl diaminodiphenyl methane, triglycidyl aminophenol, tetraglycidyl xylylene diamine, and substituted or hydrogenated ones thereof.

Useful tetraglycidyl diaminodiphenyl methanes as described above include "Sumiepoxy (registered trademark)" ELM434 (manufactured by Sumitomo Chemical Co., Ltd.), YH434L (manufactured by Nippon Steel Chemical Co., Ltd.), "jER (registered trademark)" 604 (manufactured by Mitsubishi Chemical Corporation), and "Araldite (registered trademark)" MY720 or MY721 (both manufactured by Huntsman Advanced Materials Gmbh). Useful triglycidyl aminophenols and alkyl-substituted compounds thereof include "Sumiepoxy (registered trademark)" ELM100 or ELM120 (manufactured by Sumitomo Chemical Co., Ltd.), "Araldite (registered trademark)" MY0500, MY0510, or MY0600 (manufactured by Huntsman Advanced Materials Gmbh), and "jER (registered trademark)" 630 (manufactured by Mitsubishi Chemical Corporation). Useful tetraglycidyl xylylene diamines and hydrogenated-compounds include "Tetrad (registered trademark)" -X and "Tetrad (registered trademark)" -C (manufactured by Mitsubishi Gas Chemical Co., Inc.)

There are no specific limitations on the bifunctional amine type epoxy resin to be used, but preferred ones include diglycidyl anilines and substituted- or hydrogenated-compounds thereof. Examples of such diglycidyl anilines include GAN (manufactured by Nippon Kayaku Co., Ltd.), and examples of alkyl-substituted diglycidyl aniline include GOT (manufactured by Nippon Kayaku Co., Ltd.). Furthermore, allyloxy-substituted diglycidyl anilines include, for instance, N,N-diglycidyl-4-phenoxy aniline, N,N-diglycidyl-4-(4-methyl phenoxy) aniline, N,N-diglycidyl-4-(4-tert-butyl phenoxy) aniline, and N,N-diglycidyl-4-(4-phenoxy phenoxy) aniline.

Polyfunctional amine type epoxy resin is used preferably as epoxy resin [A] for the present invention because it can produce a cured resin with well-balanced mechanical characteristics including heat resistance and elastic modulus. It is preferable that such a polyfunctional amine type epoxy resin account for 40 to 70 mass% of the total epoxy resin weight.

Bifunctional amine type epoxy resin is used preferably as epoxy resin [A] for the present invention because it can serve to provide a resin composition with low viscosity and a cured resin with high elastic modulus. It is preferable that such a bifunctional amine type epoxy resin account for 15 to 40 mass% of the total epoxy resin weight. It is also preferable to use such a bifunctional amine type epoxy resin in combination with a polyfunctional amine type epoxy resin because it serves to achieve an improved balance among viscosity, heat resistance, and other mechanical characteristics.

Epoxy resin [A] to be used for the present invention may contain other components such as an epoxy resin that is not of a glycidyl amine type and a copolymer of an epoxy resin and a thermosetting resin. Examples of the aforementioned thermosetting resin to be copolymerized with an epoxy resin include, for instance, unsaturated polyester resin, vinyl ester resin, epoxy resin, benzoxazine resin, phenol resin, urea resin, melamine resin, and polyimide resin. These resin compositions and compounds may be used singly or in combination.

Preferred epoxy resins that can be used as a non-glycidyl amine type epoxy resin as described above include bifunctional epoxy resins such as glycidyl ether type epoxy resin produced from a phenol as precursor. Such epoxy resins include bisphenol A type epoxy resin, bisphenol F-type epoxy resin, bisphenol S type epoxy resin, naphthalene type epoxy resin, biphenyl type epoxy resin, urethane modified epoxy resin, hydantoin-type epoxy resin, and resorcinol type epoxy resin.

Being low in viscosity, a liquid bisphenol A type epoxy resin, bisphenol F-type epoxy resin, or resorcinol type epoxy resin should preferably be used in combination with another epoxy resin.

Compared to liquid bisphenol A type epoxy resins, solid-state bisphenol A type epoxy resins will produce a structure with a low crosslink density, which will be low in heat resistance but high in toughness, and accordingly they are used in combination with a glycidyl amine type epoxy resin, liquid-state bisphenol A type epoxy resin, or bisphenol F-type epoxy resin.

An epoxy resin with a naphthalene backbone will give a cured resin with a low water absorption percentage and a high heat resistance. In addition, biphenyl type epoxy resins, dicyclopentadiene-type epoxy resins, phenol aralkyl-type epoxy resins, and diphenyl fluorene type epoxy resins are also preferred because they give cured resin with a low water absorption percentage. Urethane modified epoxy resins and isocyanate modified epoxy resins give cured resins with a high fracture toughness and a high extensibility.

Commercial products of bisphenol A type epoxy resin include "EPON (registered trademark)" 825 (manufactured by Mitsubishi Chemical Corporation), "EPICLON (registered trademark)" 850 (manufactured by DIC Corporation), "Epotohto (registered trademark)" YD-128 (manufactured by Nippon Steel Chemical Co., Ltd.), and DER-331 and DER-332 (both manufactured by The Dow Chemical Company).

Commercial products of bisphenol F-type epoxy resin include "jER (registered trademark)" 806, "jER (registered trademark)" 807, and "jER (registered trademark)" 1750 (all manufactured by Mitsubishi Chemical Corporation), "EPICLON (registered trademark)" 830 (manufactured by DIC Corporation), and "Epotohto (registered trademark)" YD-170 (manufactured by Nippon Steel Chemical Co., Ltd.).

Commercial products of resorcinol type epoxy resin include "Denacol (registered trademark)" EX-201 (manufactured by Nagase ChemteX Corporation).

Commercial products of biphenyl type epoxy resin include YX4000 (manufactured by Mitsubishi Chemical Corporation).

Commercial products of urethane modified epoxy resin include AER4152 (manufactured by Asahi Kasei E-materials Corp.).

Commercial products of hydantoin-type epoxy resin include AY238 (manufactured by Huntsman Advanced Materials Gmbh).

A polyfunctional epoxy resin that is used as an epoxy resin except for a glycidyl amine type, is described below.

Commercial products of isocyanurate-type epoxy resin include TEPIC-P (manufactured by Nissan Chemical Industries, Ltd.).

Commercial products of tris-hydroxyphenyl methane-type epoxy resin include Tactix742 (manufactured by Huntsman Advanced Materials Gmbh).

Commercial products of tetraphenylol ethane-type epoxy resin include "jER (registered trademark)" 1031 S (manufactured by Mitsubishi Chemical Corporation).

Commercial products of phenol novolac-type epoxy resin include DEN431and DEN438 (both manufactured by The Dow Chemical Company) and "jER (registered trademark)" 152 (manufactured by Mitsubishi Chemical Corporation).

Commercial products of orthocresol novolac-type epoxy resin include EOCN-1020 (manufactured by Nippon Kayaku Co., Ltd.) and "EPICLON (registered trademark)" N-660 (manufactured by DIC Corporation).

Commercial products of phenol aralkyl-type epoxy resin include NC-3000 (manufactured by Nippon Kayaku Co., Ltd.).

Commercial products of dicyclopentadiene-type epoxy resin include "EPICLON (registered trademark)" HP7200 (manufactured by DIC Corporation).

For the present invention, furthermore, a monofunctional epoxy resin can also be used in order to a cured resin

with an improved balance between the elastic modulus and the elongation percentage. Commercial products of monofunctional epoxy resin include "Denacol (registered trademark)" Ex-731 (glycidylphthalimide, manufactured by Nagase ChemteX Corporation), OPP-G (o-phenyl phenyl glycidyl ether, manufactured by Sanko Co., Ltd.), Ex-141 (phenyl glycidyl ether, manufactured by Nagase ChemteX Corporation), and Ex-146 (tert-butyl phenyl glycidyl ether, manufactured by Nagase ChemteX Corporation).

Resin particles [B] to be used for the present invention, which is insoluble in epoxy resins, must meet conditions (b1) to (b3) listed below:

(b1) the particles have a diameter distribution index of 1.0 to 1.8,
(b2) the particles have a sphericity of 90 or more, and
(b3) the particles have a glass transition temperature of 80 to 180°C.

Here, being insoluble in epoxy resins means that when an epoxy resin containing dispersed resin particles are heat-cured, the resin particles substantially do not dissolve in the epoxy resin, and that in observations by, for instance, transmission electron microscopy, particles in the cured epoxy resin do not suffer from substantial shrinkage from their original size and have clearly defined interfaces with the matrix resin.

Resin particles [B] used for the present invention should have a particle diameter distribution index of 1.0 to 1.8, preferably 1.1 to 1.5. Such a relatively narrow particle diameter distribution ensures that when prepregs produced by combining reinforcement fibers with an epoxy resin composition containing dispersed resin particles are stacked and heat-cured to form a fiber-reinforced composite material, resin particles will not penetrate into the reinforcement fiber layers or regions with an excessive interlayer thickness will not take place due to the existence of some bulky particles, leading to a fiber-reinforced composite material with a uniform interlayer thickness. If the particle diameter distribution index exceeds 1.8, some fine resin particles can penetrate into the reinforcement fiber layers to cause a decrease in interlaminar toughness and compressive strength under heat and humidity conditions, and the resulting uneven interlayer thickness will lead to a material suffering from large variations in these characteristics.

The particle diameter distribution index can be calculated by the following numeric conversion equation using a particle diameter value determined by the method described later.

[Equation 1]

$$Dn = \sum_{i=1}^{n} Di \Big/ n$$

$$Dv = \sum_{i=1}^{n} Di^{4} \Big/ \sum_{i=1}^{n} Di^{3}$$

$$PDI = Dv / Dn$$

Here, Di, n, Dn, Dv, and PDI denote the particle diameter of a particular particle, number of measurements (100), number average particle diameter, volume average particle diameter, and particle diameter distribution index, respectively.

Resin particles [B] used for the present invention should have a sphericity of 90 or more, preferably 92 or more, more preferably 96 or more, and most preferably 98 or more. Such a sphericity allows the epoxy resin composition containing these dispersed resin particles to be low in viscosity, accordingly making it possible to increase the content of the resin particles. If the sphericity is less than 90, the epoxy resin composition will have a high viscosity and this limits the content of the resin particles, leading to a material with poor interlaminar toughness.

The sphericity is determined by observing particles by scanning electronic microscopy, measuring their major and minor axes, and calculating the sphericity by the following numeric conversion equation from the average of measurements for randomly selected 30 particles.

[Equation 2]

$$\text{Sphericity} = \frac{\sum_{i=1}^{n} (\text{minor axis / major axis})}{n} \times 100$$

Resin particles [B] used for the present invention should have a glass transition temperature in the range of 80 to 180°C, more preferably 100 to 160°C , and still more preferably 130 to 155°C. Such a relatively high glass transition temperature ensures that resin particles will not suffer from deformation during heat-curing and that a stable interlayer thickness will be achieved, making it possible to obtain a fiber-reinforced composite material that has high interlaminar toughness and maintains a compressive strength stably under heat and humidity conditions. If the glass transition temperature is less than 80°C, the resulting adequate fiber-reinforced composite material will fail to have a well-balanced combination of an interlaminar toughness and a compressive strength under heat and humidity conditions. If the glass transition temperature is more than 180°C, on the other hand, the resin particles themselves will tend to be low in toughness and sufficient interface adhesion will not be achieved between the resin particles and the matrix resin, resulting in a fiber-reinforced composite material with poor interlaminar toughness.

The aforementioned glass transition temperature is determined by using differential scanning calorimetry (DSC) as follows: a specimen is heated at a heating rate of 20°C/min from 30°C to a temperature 30°C or more higher than an expected glass transition temperature, maintained at the temperature for 1 min, once cooled at a cooling rate of 20°C/min down to 0°C, maintained at the temperature for 1 min, and then heated again at a heating rate of 20°C/min while observing the glass transition temperature (Tg).

If resin particles [B] insoluble in epoxy resins further meet the aforementioned conditions from (b1) to (b3) simultaneously, the resin particles will fill a less proportion of the interlayer regions between the fiber layers. Accordingly, a fiber-reinforced composite material with a very large interlayer thickness between fiber layers can be obtained even if the quantity of the resin particles existing in the interlayer regions is not increased, and as a result, the mode II interlaminar toughness will become unprecedentedly high. The interlayer thickness is preferably in the range of 25 to 40 μm, more preferably in the range of 27 to 37 μm. The interlayer thickness can be measured by, for instance, the following procedure. A specimen of a fiber-reinforced composite material is cut in a direction perpendicular to the carbon fibers, and the cross section is polished and photographed with an optical microscope at a magnification of 200 or more. In an appropriately-selected region between fiber layers in the photograph, a line parallel to the carbon fiber layers is drawn so that it represents a carbon fiber volume content of 50%, and it is assumed to be a boundary line between the internal region of the fiber layer and the interlayer region between the fiber layers. A boundary line averaged over a length of 100 μm is drawn, and the distance between them is assumed to represent the interlayer thickness.

Resin particles [B] used for the present invention preferably has an average particle diameter in the range of 8 to 35 μm, more preferably in the range of 10 to 30 μm. An average particle diameter in this range ensures that when prepregs produced by combining reinforcement fibers with an epoxy resin composition containing dispersed resin particles are stacked and heat-cured to form a fiber-reinforced composite material, resin particles will not penetrate into the reinforcement fiber layers or regions with an excessive interlayer thickness will not result from the existence of some bulky particles, leading to a fiber-reinforced composite material with a uniform interlayer thickness. Accordingly, this ensures a stably high interlaminar toughness.

There are no specific limitations on the resin species used as resin particles [B] for the present invention, and it may be either a thermoplastic resin or thermosetting resin having a glass transition temperature in the range of 80°C to 180°C.

Specifically, usable thermoplastic resins include vinyl polymer, polyester, polyamide, polyarylene ether, polyarylene sulfide, polyethersulfone, polysulfone, polyether ketone, polyether ether ketone, polyurethane, polycarbonate, polyamide-imide, polyimide, polyetherimide, polyacetal, silicone, and copolymers thereof.

Specifically, usable thermosetting resins include epoxy resin, benzoxazine resin, vinyl ester resin, unsaturated polyester resin, urethane resin, phenol resin, melamine resin, maleimide resin, cyanate ester resin, and urea resin.

The resins given above can be used singly or in combination.

Of these, polyamide, which is a thermoplastic resin, is preferred because of its high elongation percentage,

toughness, and adhesiveness with matrix resins. Examples of polyamide include polyamide compounds that can be produced through condensation polymerization of lactams having a 3- or more-membered ring, polymerizable aminocarboxylic acids, dibasic acids, diamines, salts thereof, and mixtures thereof.

Specifically, they include polyhexamethylene terephthalamide (nylon 6T), polynonane terephthalamide (nylon 9T), poly-m-xylene adipamide (nylon MXD), copolymers of 3,3'-dimethyl-4,4'-diaminodicyclohexyl methane, isophthalic acid, and 12-aminododecanoic acid (for instance, "Grilamid (registered trademark)" TR55, manufactured by Emser Werke, Inc.), copolymers of 3,3'-dimethyl-4,4'-diaminodicyclohexyl methane and dodeca diacid (for instance, "Grilamid (registered trademark)" TR90, manufactured by Emser Werke, Inc.), mixtures of a copolymer of 3,3'-dimethyl-4,4'-diaminodicyclohexyl methane, isophthalic acid, and 12-aminododecanoic acid, and a copolymer of 3,3'-dimethyl-4,4'-diaminodicyclohexyl methane and dodeca diacid (for instance, "Grilamid (registered trademark)" TR70LX, manufactured by Emser Werke, Inc.), and copolymers of 4,4'-diaminodicyclohexyl methane and dodeca diacid (for instance, "TROGAMID (registered trademark)" CX7323, manufactured by Degussa AG).

In particular, a polyamide compound having a chemical structure as represented by general formula (1) is preferred because when processed into a fiber-reinforced composite material, it can provide a fiber-reinforced composite material having a high wet heat resistance and solvent resistance as well as a high impact resistance and interlaminar toughness.

[Chemical compound 2]

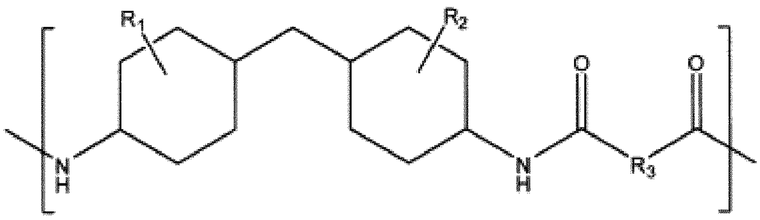

(1)

(In the formula, $R_1$ and $R_2$ represent a hydrogen atom, an alkyl group containing 1 to 8 carbon atoms, or a halogen atom, and may be identical to or different from each other. In the formula, $R_3$ represents a methylene group containing 1 to 20 carbon atoms, or a phenylene group).

Such polyamide compounds include copolymers of 3,3'-dimethyl-4,4'-diaminodicyclohexyl methane, isophthalic acid, and 12-aminododecanoic acid (for instance, "Grilamid (registered trademark)" TR55, manufactured by Emser Werke, Inc.), copolymers of 3,3'-dimethyl-4,4'-diaminodicyclohexyl methane and dodeca diacid (for instance, "Grilamid (registered trademark)" TR90, manufactured by Emser Werke, Inc.), mixtures of a copolymer of 3,3'-dimethyl-4,4'-diaminodicyclohexyl methane, isophthalic acid, and 12-aminododecanoic acid, and a copolymer of 3,3'-dimethyl-4,4'-diaminodicyclohexyl methane and dodeca diacid (for instance, "Grilamid (registered trademark)" TR70LX, manufactured by Emser Werke, Inc.), and copolymers of 4,4'-diaminodicyclohexyl methane and dodeca diacid (for instance, "TROGAMID (registered trademark)" CX7323, manufactured by Degussa AG).

In general formula (1), furthermore, $R_3$ more preferably represents a methylene group containing 1 to 20 carbon atoms. Such polyamide compounds include a copolymer of 3,3'-dimethyl-4,4'-diaminodicyclohexyl methane and dodeca diacid (for instance, "Grilamid (registered trademark)" TR90, manufactured by Emser Werke, Inc.), and a copolymer of 4,4'-diaminodicyclohexyl methane and dodeca diacid (for instance, "TROGAMID (registered trademark)" CX7323, manufactured by Degussa AG).

The epoxy resin composition for fiber-reinforced composite material production according to the present invention is required to contain at least one elastomer component, [C], selected from the group consisting of rubber particles and block copolymers containing a block with a glass transition temperature of 20°C or less. Such an elastomer component [C] is added with the aim of forming a fine elastomer phase in a cured epoxy matrix phase. Accordingly, a plane strain state caused by a mode I stress load applied to a cured resin can be eliminated by destruction of the elastomer phase and formation of gaps (cavitation) and plastic deformation of the epoxy matrix phase is induced. As a result, a large energy absorption is caused, leading to a fiber-reinforced composite material with an improved mode I interlaminar toughness. If such an elastomer component [C] is at least one selected from the group consisting of core-shell rubber particles and block copolymers containing a block with a glass transition temperature of 20°C or less, a fine elastomer phase can be introduced while minimizing the compatibility of the elastomer component with the epoxy resin, making it possible to form a fiber-reinforced composite material with an improved mode I interlaminar toughness while previnting a decrease of the heat resistance and elastic modulus.

In particular, if such an elastomer component [C] is used in combination with the aforementioned resin particles [B], both the mode I interlaminar toughness and the mode II interlaminar toughness are achieved at high levels through

the mechanism described below.

Specifically, a fiber-reinforced composite material containing the aforementioned resin particles [B] in regions between fiber layers will have a large interlayer thickness, leading to an improved mode II interlaminar toughness. regions between fiber layers will contain an increased amount of the matrix resin, and as a result, when cracking proceeds in interlayer regions, the matrix resin will absorb an increased amount of energy, allowing elastomer component [C] to serve more effectively in improving the mode I interlaminar toughness.

There are no specific limitations on the chemical structure, molecular weight, etc. of the block copolymers containing a block with a glass transition temperature of 20°C or less, but it is preferable that the block with a glass transition temperature of 20°C or less is not compatible with epoxy resins and that the block copolymers also contain a block that is compatible with epoxy resins.

From the viewpoint of handleability etc., it is preferable that the aforementioned rubber particles be crosslinked rubber particles or core-shell rubber particles consisting of crosslinked rubber particles and a heterogeneous polymer graft-polymerized to their surfaces. These rubber particles preferably have a primary particle diameter in the range of 50 to 300 nm, particularly preferably 80 to 200 nm. It is also preferable that these rubber particles have high affinity with the epoxy resin used and that they do not undergo secondary coagulation during resin preparation, molding, or curing.

Commercial products of the crosslinked rubber particles include FX501P (manufactured by Japan Synthetic Rubber Co., Ltd.), which is formed of a crosslinked, carboxyl modified butadiene-acrylonitrile copolymer, and CX-MN series (manufactured by Nippon Shokubai Co., Ltd.) and YR-500 series (manufactured by Nippon Steel Chemical Co., Ltd.), which are formed of fine acrylic rubber particles.

Commercial products of the core shell rubber particles include, for instance, "Paraloid (registered trademark)" EXL-2655 (manufactured by Kureha Corporation), which is formed of a butadiene-alkyl methacrylate-styrene copolymerization, "Stafiloid (registered trademark)" AC-3355 and TR-2122 (manufactured by Takeda Pharmaceutical Company Limited), which is formed of a acrylate-methacrylate copolymer, "PARALOID (registered trademark) EXL-2611" and EXL-3387 (Rohm and Haas Company), which is formed of a butyl acrylate-methyl methacrylate copolymerization, and "Kane Ace (registered trademark)" MX series (Kaneka Corporation).

It is also preferable that elastomer component [C] be at least one block copolymer (hereinafter, occasionally referred to simply as block copolymer) selected from the group consisting of copolymers having a structure of S-B-M, B-M, or M-B-M. This serves to produce a fiber-reinforced composite material that has a largely improved mode I interlaminar toughness while maintaining high heat resistance as well as high mechanical strength under severe use conditions such as low temperature.

Here, each of the aforementioned blocks represented as S, B, and M is connected to an adjacent one via a covalent bond, or via an intermediary molecule that is connected to the block via a covalent bond and connected to the adjacent one via another covalent bond.

Block M contains a homopolymer of polymethyl methacrylate or a copolymer in which methyl methacrylate accounts for at least 50 wt%.

Block B is incompatible with block M and has a glass transition temperature Tg (hereinafter, occasionally referred to simply as Tg) of 20°C or less.

Regardless of whether block B is produced from an epoxy resin composition or a single block copolymer, its glass transition temperature Tg can be measured by DMA using ARES (manufactured from TA Instruments), a dynamic viscoelasticity measuring device. Specifically, a plate-like specimen of $1 \times 2.5 \times 34$ mm is subjected to DMA while applying periodic traction at 1 Hz in the temperature range of -60 to 250°C, and the value of tan $\delta$ is assumed to represent its glass transition temperature Tg. Here, specimens are prepared as follows. In the case where an epoxy resin composition is used, an uncured resin composition is deaerated in a vacuum and then cured for 2 hours at a temperature of 130°C in a mold set to a thickness of 1 mm using a "Teflon (registered trademark)" spacer with a thickness of 1 mm to produce a void-free plate-like cured material. In the case of a single block copolymer, a void-free plate can be produced similarly by using a twin screw extruder. Thsese plates are cut to the aforementioned size using a diamond cutter to provide specimens for evaluation.

Block S is incompatible with blocks B and M and has a glass transition temperature Tg that is higher than that of block B.

From the viewpoint of improvement in toughness, furthermore, any of blocks S, B, and M in an S-B-M type block copolymer or either block B and M of a B-M or M-B-M type block copolymer be compatible with epoxy resins.

From the viewpoint of mechanical characteristics and adaptability to composite preparation processes, the content of elastomer component [C] is preferably in the range of 2 to 15 parts by mass, more preferably 3 to 10 parts by mass, still more preferably 4 to 8 parts by mass, relative to 100 parts by mass, or the total amount, of the epoxy resin in the epoxy resin composition. If the content is less than 2 parts by mass, the resulting cured material will have a decreased toughness and plastic deformability, leading to a fiber-reinforced composite material with a decreased interlaminar toughness. If the content is more than 15 parts by mass, the resulting cured material will have a significantly decreased elastic modulus, leading to a fiber-reinforced composite material with a decreased compressive strength in

the fiber direction. In addition, adequate resin flow will not take place at the molding temperature, often resulting in a fiber-reinforced composite material containing voids.

Introduction, as a copolymerization component, of a monomer other than methyl methacrylate into the aforementioned block M has been practiced favorably from the viewpoint of maintaining compatibility with epoxy resins and providing a cured material with various controlled characteristics. There are no specific limitations on the monomeric components for copolymerization, and suitable ones may be selected appropriately. To ensure compatibility epoxy resins with a high SP value, however, the use of monomers with an SP value higher than that of methyl methacrylate, water-soluble monomers in particular, has been preferred. Among others, acrylamide derivatives can be used effectively, and the use of dimethyl acrylamide is particularly effective. Furthermore, reactive monomers can also be used.

Here, the SP value means the generally known solubility parameter, which represents the solubility and compatibility. There are some methods that calculate the SP value from heat of evaporation or others that estimate the SP value from molecular structures. Here, SP values calculated molecular structures according to Fedors' method described in Polym. Eng. Sci., 14(2), 147-154 (1974) should be adopted, and they should be represented in $(cal/cm^3)^{1/2}$.

A reactive monomer means a monomer having a functional group that can react with an oxirane group in an epoxy molecule or a functional group in a curing agent. For instance, useful examples include, but not limited to, monomers having reactive functional groups such as oxirane group, amine group, or carboxyl group. Useful reactive monomers include (meth)acrylic acid (in the present Description, methacrylic acid and acrylic acid are collectively referred to as (meth)acrylic acid) and monomers that can form (meth)acrylic acid through hydrolysis. The use of a reactive monomer is preferred because it ensures Improvement in the compatibility with epoxy resins and adhesion at the interface between epoxy resin and a block copolymer.

Other monomers that can serve to form block M include glycidyl methacrylate and tert-butyl methacrylate, but it is preferable that at least 60% of block M is accounted for by syndiotactic PMMA (polymethyl methacrylate).

The glass transition temperature Tg of block B is 20°C or less, preferably 0°C or less, and more preferably -40°C or less. The glass transition temperature Tg should be as low as possible from the viewpoint of toughness, but a Tg of less than -100°C may cause some processability problems possibly resulting in a fiber-reinforced composite material with a rough cut surface.

Block B is preferably an elastomer block, and it is preferable that the monomer to be used to synthesize such an elastomer block be a diene selected from the group consisting of butadiene, isoprene, 2,3-dimethyl-1,3-butadiene, 1,3-pentadiene, and 2-phenyl-1,3-butadiene. From the viewpoint of toughness, in particular, it should preferably be selected from the group consisting of polybutadiene, polyisoprene, random copolymer thereof, partially or entirely hydrogenated polydiene. Useful polybutadiene compounds include 1,2-polybutadiene (Tg: about 0°C), but it is more preferable to use a polybutadiene with a lowest level glass transition temperature Tg such as 1,4-polybutadiene (Tg: about -90°C). This because the use of a low block B with a low glass transition temperature Tg is advantageous from the viewpoint of impact resistance and toughness. Block B may be hydrogenated. This hydrogenation may be effected by a common method.

Useful monomers to constitute block B also include alkyl (meth)acrylate. Specific examples include ethyl acrylate (-24°C), butyl acrylate (-54°C), 2-ethylhexyl acrylate (-85°C), hydroxyethyl acrylate (-15°C), and 2-ethylhexyl meta-acrylate (-10°C). Here, the figure in parentheses following each acrylate compound name shows the Tg of block B that is formed from the acrylate compound. Of these, the use of butyl acrylate is preferable. These acrylate monomers are incompatible with the acrylate component in block M in which methyl methacrylate accounts for at least 50 wt%.

Of these, a block formed from a polymer selected from the group consisting of 1,4-polybutadiene, polybutyl acrylate, and poly (2-ethylhexyl acrylate) is preferred as block B.

If a triblock copolymer S-B-M is used as the block copolymer, block S should be incompatible with blocks B and M, and its glass transition temperature Tg should be higher than that of block B. The Tg or melting point of block S is preferably 23°C or more, more preferably 50°C or more. Examples of block S include those formed from an aromatic vinyl compound such as styrene, $\alpha$-methyl styrene, or vinyl toluene and those formed from alkyl acid with an alkyl chain with a carbon atom of 1 to 18 and/ or an alkyl ester of methacrylic acid. Those formed from alkyl acid with an alkyl chain with a carbon atom of 1 to 18 and/ or an alkyl ester of methacrylic acid are mutually incompatible with block M in which methyl methacrylate accounts for at least 50 wt%.

If a triblock copolymer M-B-M is used as the block copolymer, the two blocks M in the triblock copolymer M-B-M may be identical to or different from each other. They may be formed from the same type of monomers but have different molecular weights.

If a triblock copolymer M-B-M and a diblock copolymer B-M are usd in combination as the block copolymer, block M in the triblock copolymer M-B-M and block M in the diblock copolymer B-M may be identical to or different from each other, and block B in the triblock M-B-M and that in the diblock copolymer B-M may be identical to or different from each other.

If a triblock copolymer M-B-M and a diblock copolymer B-M are usd in combination as the block copolymer, block M in the triblock copolymer M-B-M and block M in the diblock copolymer B-M may be identical to or different from

each other, and block B in the triblock M-B-M and that in the diblock copolymer B-M may be identical to or different from each other.

The block copolymer can be produced through anionic polymerization according to, for instance, methods as described in EP Patent No. 524,054 and EP Patent No. 749,987.

Specific examples of triblock copolymer S-B-M include Nanostrength 123, Nanostrength 250, Nanostrength 012, Nanostrength E20, and Nanostrength E40, styrene-butadiene-methyl methacrylate based copolymer products manufactured by Arkema K.K. Specific examples of triblock copolymer M-B-M include methyl methacrylate-butyl acrylate-methyl methacrylate based copolymer products such as Nanostrength M22 manufactured by Arkema K.K. and Nanostrength M22N and Nanostrength SM4032XM10 which are produced by copolymerizing a monomer having a high SP value with the aforementioned Nanostrength M22 manufactured by Arkema K.K. In particular, Nanostrength M22N and SM4032XM10, which are copolymerized with a monomer having a high SP value, are preferred because they can form fine phase-separated structures to achieve high toughness.

When used, the epoxy resin composition for fiber-reinforced composite material production according to the present invention contains an epoxy resin curing agent [D]. A curing agent as described herein is a curing agent for the epoxy resin contained in the epoxy resin composition according to the present invention, and it is a compound having an active group that can react with the epoxy group. Specifically, examples of the curing agent include, for instance dicyandiamide, aromatic polyamine, aminobenzoic acid ester, various anhydrides, phenol novolac resin, cresol novolac resin, polyphenol compound, imidazole derivatives, aliphatic amine, tetramethyl guanidine, thiourea addition amine, methyl hexahydro phthalic anhydride, other carboxylic anhydrides, carboxylic acid hydrazide, carboxylic acid amide, polymercaptan, boron trifluoride ethyl amine complex, and other Lewis acid complexes.

The use of aromatic polyamine as the curing agent makes it possible to produce a cured epoxy resin with high heat resistance. In particular, of the various aromatic polyamine compounds, diaminodiphenyl sulfone and their derivatives and various isomers are the most suitable curing agents to produce a cured epoxy resin with a high heat resistance.

Furthermore, if a combination of dicyandiamide and a urea compound such as 3, 4-dichlorophenyl-1, 1-dimethylurea, or an imidazole is used as the curing agent, high heat resistance and water resistance can be achieved even when curing is performed at a relatively low temperature. The use of an anhydride to cure an epoxy resin provides a cured material that has a lower water absorption percentage compared to curing with an amine compound. Other curing agents include the above ones in latent forms such as microencapsulated ones, which serve to provide prepregs with high storage stability that will not suffer from significant changes particularly in tackiness and drape property even if left to stand at room temperature.

The optimum content of a curing agent depends on the type of epoxy resin and curing agent used. In the case of an aromatic amine curing agent, for instance, it is preferable to add it so that it will be stoichiometrically equivalent. However, a resin with a higher elastic modulus compared to the case of equivalency may be obtained when using an epoxy resin and an aromatic amine curing agent in such a manner that the ratio of the quantity of active hydrogen in the latter to the quantity of the epoxy group in the former is about 0.7 to 0.9, and this is also a preferable embodiment. These curing agents may be used singly or a plurality thereof may be used in combination.

Commercial products of aromatic polyamine curing agents include Seikacure S (manufactured by Wakayama Seika Kogyo Co., Ltd.), MDA-220 (manufactured by Mitsui Chemicals, Inc.), "jER Cure (registered trademark)" W (manufactured by Mitsubishi Chemical Corporation), and 3,3'-DAS (manufactured by Mitsui Chemicals, Inc.), "Lonzacure (registered trademark)" M-DEA (manufactured by Lonza), "Lonzacure (registered trademark)" M-DIPA (manufactured by Lonza), "Lonzacure (registered trademark)" M-MIPA (manufactured by Lonza), and "Lonzacure (registered trademark)" DETDA 80 (manufactured by Lonza).

A composition may contain these epoxy resins and curing agents, part of which may be subjected to preliminary reaction in advance. In some cases, this method can serve effectively for viscosity adjustment and storage stability improvement.

For the epoxy resin composition for fiber-reinforced composite material production according to the present invention, it is preferable that the constituents (components) other than resin particles [B] and epoxy resin curing agent [D] be first heated and kneaded uniformly at a temperature of about 150 to 170°C and cooled to a temperature of about 60°C, and then resin particles [B] and epoxy resin curing agent [D] are added, followed by further kneading, although methods to be used to mix the components are not limited to this.

The epoxy resin composition according to the present invention may contain a coupling agent, thermosetting resin particles, thermoplastic resin soluble in epoxy resins, or inorganic fillers such as silica gel, carbon black, clay, carbon nanotube, and metal powder, unless they impair the effect of the invention.

The prepreg according to the present invention is produced by impregnating reinforcement fibers with the aforementioned epoxy resin composition for fiber-reinforced composite material production. Reinforcement fibers that can be used for the prepreg according to the present invention include carbon fiber, glass fiber, aramid fiber, boron fiber, PBO fiber, high-strength polyethylene fiber, alumina fiber, and silicon carbide fiber. A plurality of these fibers may be used as a mixture. There are no specific limitations on the form and way of alignment of the reinforcement fibers, and

useful fiber structures include, for instance, long fibers paralleled in one direction, single tow, woven fabric, knit fabric, nonwoven fabric, mat, and braid.

With a high specific modulus and specific strength, carbon fibers can be used effectively, particularly when it is necessary to produce lightweight or high-strength materials.

With respect to carbon fibers used preferably for the present invention, virtually any type of carbon fibers can be adopted for specific uses, but it is preferable that the carbon fibers used have a tensile modulus up to 400 GPa from the viewpoint of interlaminar toughness and impact resistance. From the viewpoint of strength, carbon fibers with a tensile strength of 4.4 to 6.5 GPa are used preferably because a composite material with high rigidity and mechanical strength can be produced. Tensile elongation is also an important factor, and it is preferable that the carbon fibers have a high strength and a high elongation percentage of 1.7 to 2.3%. The most suitable carbon fibers will simultaneously have various characteristics including a tensile modulus of at least 230 GPa, tensile strength of at least 4.4 GPa, and tensile elongation of at least 1.7%.

Commercial products of carbon fibers include "Torayca (registered trademark)" T800G-24K, "Torayca (registered trademark)" T800S-24K, "Torayca (registered trademark)" T700G-24K, "Torayca (registered trademark)" T300-3K, and "Torayca (registered trademark)" T700S-12K (all manufactured by Toray Industries, Inc.).

With respect to the form of way of alignment of carbon fibers, long fibers paralleled in one direction, woven fabric, or others may be selected appropriately, but if a carbon fiber-reinforced composite material that is lightweight and relatively highly durable is to be obtained, it is preferable to use carbon fibers in the form of long fibers (fiber bundles) paralleled in one direction, woven fabric, or other continuous fibers.

Carbon fiber bundles to be used for the present invention preferably have a monofilament fineness of 0.2 to 2.0 dtex, more preferably 0.4 to 1.8 dtex. If the monofilament fineness is less than 0.2 dtex, carbon fiber bundles may be damaged easily due to contact with guide rollers during twining, and similar damage may take place during an impregnation step for the resin composition. If the monofilament fineness is more than 2.0 dtex, resin composition can fail to impregnate carbon fiber bundles sufficiently, possibly resulting in a decrease in fatigue resistance.

The carbon fiber bundles to be used for the present invention preferably contain 2,500 to 50,000 filaments per fiber bundle. If the number of filaments is less than 2,500, fibers may be easily caused to meander, leading to a decrease in strength. If the number of filaments is more than 50,000, resin impregnation may be difficult during prepreg preparation or during molding. The number of filaments is more preferably in the range of 2,800 to 40,000.

It is preferable that the prepreg according to the present invention be in the form of carbon fiber impregnated with an epoxy resin composition for fiber-reinforced composite material production, and the mass fraction of carbon fibers in the prepreg is preferably 40 to 90 mass%, more preferably 50 to 80 mass%. If the mass fraction of carbon fibers is too low, the resulting composite material will be too heavy and the advantage of the fiber-reinforced composite material having high specific strength and specific modulus will be impaired in some cases, while if the mass fraction of carbon fibers is too high, impregnation with the resin composition will not performed sufficiently and the resulting composite material will suffer from many voids, possibly leading to large deterioration in mechanical characteristics.

The prepreg according to the present invention preferably has a structure in which a particle-rich layer, that is, a layer in which localized existence of the aforementioned resin particles [B] is clearly confirmed in observed cross sections (hereinafter, occasionally referred to as particle layer), is formed near the surface of the prepreg.

If a carbon fiber-reinforced composite material is produced by stacking prepregs and curing the epoxy resin, this structure allows a resin layer to be formed easily between prepreg layers, i.e., composite material layers. Accordingly, strong adhesion and contact will be achieved between composite material layers and the resulting carbon fiber-reinforced composite material will have high-level interlaminar toughness and impact resistance.

From this viewpoint, the aforementioned particle layer preferably exists within the depth range of 20%, more preferably 10%, of the total thickness (100%) of the prepreg, measured from the surface of the prepreg in the thickness direction, with the measurement started from the surface of the prepreg. Furthermore, a particle layer may exist only at one side, but cautions are necessary because the prepreg will have two different sides. If interlayer regions containing particles and those free of particles coexist as a result of stacking of prepregs in an inappropriate way by mistake, the resulting composite material will have poor interlaminar toughness. It is preferable that particle layers exist at both sides of the prepreg, allowing the prepreg to have two identical sides and making the stacking operation easy.

Furthermore, the proportion of thermoplastic resin particles existing in the particle layers is preferably 90 to 100 mass%, more preferably 95 to 100 mass%, of the total quantity, or 100 mass%, of thermoplastic resin particles existing in the prepreg.

This proportion of existing particles can be evaluated by, for instance, the undermentioned method. Specifically, a prepreg is interposed between two polytetrafluoroethylene resin plates with smooth surfaces and brought into close contact, then the temperature is increased gradually for 7 days up to a curing temperature to ensure gelation and curing, thus producing a plate-like cured prepreg. After the curing step is completed, the cured prepreg is cut in a direction perpendicular to the contact surfaces and the cross section is polished and then photographed with an optical microscope, followed by drawing two lines, each being parallel to a surface of the prepreg and located at a depth equal to 20% of

the thickness from the surface. Then, the total area of the particles existing between each surface of the prepreg and each of the lines drawn above and the total area of the particles existing across the entire thickness of the prepreg are determined, followed by calculating the proportion of the number of particles existing in the regions of 20% depth from the prepreg surfaces to the total number of particles existing across the entire (100%) thickness of the prepreg. Here, the total area of the particles is determined by cutting the particle portions out of a cross-sectional photograph and converting their mass. The particles may be dyed if it is difficult to identify the particle portions dispersed in the cross-sectional photograph.

The prepreg according to the present invention can be produced by applying methods as disclosed in Japanese Unexamined patent Publication (Kokai) No. HEI-1-26651, Japanese Unexamined patent Publication (Kokai) No. SHO-63-170427, or Japanese Unexamined patent Publication (Kokai) No. SHO-63-170428. Specifically, the prepreg according to the present invention can be produced by a method in which the surface of a primary prepreg consisting of carbon fibers and an epoxy resin, i.e., matrix resin, is coated with thermoplastic resin particles, which are simply in the form of particles, a method in which a mixture these particles mixed uniform in an epoxy resin, i.e., matrix resin, is prepared and used to impregnate carbon fiber, and during this impregnation process, reinforcement fibers are located so that it acts to prevent the penetration of these particles to ensure localized existence of particles in the prepreg's surface regions, and a method in which a primary prepreg is prepared in advance by impregnating carbon fibers with an epoxy resin, and a thermosetting resin film containing these particles at a high concentration is bonded on the surface of the primary prepreg. The uniform existence of thermoplastic resin particles in the region of 20% depth of the thickness of the prepreg serves to produce a prepreg for fiber composite material production having high interlaminar toughness.

The prepreg according to the present invention can be produced favorably by some different methods including a wet method in which the epoxy resin composition according to the present invention is dissolved in a solvent such as methyl ethyl ketone and methanol to produce a solution with a decreased viscosity, and then used to impregnate reinforcement fibers and a hot melt method in which the epoxy resin composition is heated to decrease its viscosity and then used to impregnate reinforcement fibers.

In the wet method, reinforcement fibers are immersed in a solution of the epoxy resin composition and then pulled out, and the solvent is evaporated using a tool such as oven to provide a prepreg.

In a hot melt method, an epoxy resin composition, with its viscosity decreased by heating, is used directly to impregnate reinforcement fibers. Alternatively, resin films are prepared by coating release paper or the like with an epoxy resin composition and the resin films are used to cover either or both sides of reinforcement fibers and pressed under heat so that the epoxy resin composition is transferred to them for impregnation, thereby producing a prepreg. This hot melt method is preferred because virtually no solvent will remain in the prepreg.

The fiber-reinforced composite material according to the present invention can be produced by, for instance, stacking a plurality of prepregs prepared by a method as described above and heat and pressure are applied to the resulting layered body to heat-cure the epoxy resin.

The application of heat and pressure is carried out by using such methods as press molding, autoclave molding, bagging molding, wrapping tape molding, and internal pressure molding. In particular, wrapping tape molding and internal pressure molding have been preferred for production of molded sports goods.

In the wrapping tape molding method, a core bar such as mandrel is wound with a prepreg to produce a tube of fiber-reinforced composite material, and this method is suitable for manufacturing rod-like products including golf club shaft and fishing rod. More specifically, a mandrel is wound with a prepreg and further wound with a wrapping tape of thermoplastic resin film to cover the prepreg so that the prepreg is secured and pressed, followed by heating and curing the epoxy resin in an oven and removing the core bar to provide a tubular material.

In the internal pressure molding method, a preform formed of an internal pressure applying body such as a tube of thermoplastic resin wound with a prepreg is fixed in a mold, and high pressure gas is introduced into the internal pressure applying body to apply pressure and heat the mold simultaneously to produce a tube-like body. The internal pressure molding method has been preferred particularly for the molding of articles of a complicated shape such as golf club shaft, bat, and rackets for tennis and badminton.

As an example, the carbon fiber-reinforced composite material according to the invention can be produced by stacking sheets of the aforementioned prepreg according to the invention into a required shape and subsequently pressed under heat to cure the epoxy resin.

In another process, the fiber-reinforced composite material according to the invention can be produced from the aforementioned epoxy resin composition without using a prepreg.

This can be effected by, for instance, impregnating reinforcement fibers directly with the epoxy resin composition according to the invention, and subsequently heat-curing it, and available methods include hand lay-up, filament winding, pultrusion, resin film infusion, resin injection molding, and resin transfer molding.

Examples

The epoxy resin composition according to the invention as well as a prepreg and a fiber-reinforced composite material produced therefrom are described in detail below with reference to Examples. Described below are the resin materials used in Examples and the preparation and evaluation methods used for prepregs and fiber-reinforced composite materials. Preparation and evaluation of prepregs in Examples were performed in an atmosphere with a temperature of 25° C±2° C and relative humidity of 50% unless otherwise specified.

<Carbon Fiber (Reinforcement Fiber)>

○ "Torayca (registered trademark)" T800G-24K-31E (carbon fiber with 24,000 filaments/bundle, tensile strength of 5.9 GPa, tensile modulus of 294 GPa, tensile elongation of 2.0%, manufactured by Toray Industries, Inc.).

<Epoxy Resin [A]>

○ ELM434 (tetraglycidyl diaminodiphenyl methane, manufactured by Sumitomo Chemical Co., Ltd.)
○ "jER (registered trademark)" 630 (triglycidyl-p-aminophenol, manufactured by Mitsubishi Chemical Corporation)
○ MY0600 (m-aminophenol type epoxy resin, epoxy equivalent 118, manufactured by Huntsman Advanced Materials K.K.)
○ "jER (registered trademark)" 828 (bisphenol A type epoxy resin, manufactured by Mitsubishi Chemical Corporation))
○ "EPICLON (registered trademark)" 830 (bisphenol F-type epoxy resin, manufactured by DIC Corporation)
○ GOT (N-diglycidyl toluidine, manufactured by Nippon Kayaku Co., Ltd.)
○ GAN (N-diglycidyl aniline, manufactured by Nippon Kayaku Co., Ltd.)
○ "EPICLON (registered trademark)" HP7200H (epoxy resin containing dicyclopentadiene backbone, manufactured by DIC Corporation)

<Elastomer component [C]>

○ "Nanostrength (registered trademark)" M22N (M-B-M type block copolymer where B denotes butyl acrylate (Tg: -54°C) and M denotes a random copolymer chain containing methyl methacrylate and polar acrylic monomer, manufactured by Arkema K.K.)
○ "Nanostrength (registered trademark)" SM4032XM10 (M-B-M type block copolymer where B denotes butyl acrylate (Tg: -54°C) and M denotes a random copolymer chain composed of methyl methacrylate and carboxyl-containing acrylic monomer, manufactured by Arkema K.K.)
○ "Kane Ace (registered trademark)" MX-416 (core-shell rubber particles of styrene-butadiene-methyl methacrylate, average particle diameter 100 nm, manufactured by Kaneka Corporation). Tetraglycidyl diaminodiphenyl methane based master batch with a concentration of 25 mass%. In the constituent lists for Examples and Comparative examples in Table 1, the contents of rubber particles are given in parts by mass and the tetraglycidyl diaminodiphenyl methane component in master batches is included in ELM434.

<Epoxy resin curing agent [D]>

○ "Seikacure (registered trademark)" -S (4, 4'-diaminodiphenyl sulfone, manufactured by Wakayama Seika Kogyo Co., Ltd.)
○ 3, 3'-DAS (3, 3'-diaminodiphenyl sulfone, manufactured by Mitsui Fine Chemical, Inc.)

<Other components>

○ "Sumikaexcel (registered trademark)" PES5003P (polyethersulfone, manufactured by Sumitomo Chemical Co., Ltd.)

<Resin particles [B]>

○ Particle 1 (particles produced from "Trogamid (registered trademark)" CX7323 used as raw material, and having an average particle diameter of 19.5 μm, particle diameter distribution index of 1.17, sphericity of 98, and Tg of 137°C)

(Production method for particle 1: by reference to International Publication WO 2009/142231)

In a 1,000 ml four-neck flask, 20 g of polyamide (weight average molecular weight 17, 000, "TROGAMID (registered trademark)" CX7323, manufactured by Degussa) used as polymer A, 500 g formic acid used as an organic solvent, and 20 g of polyvinyl alcohol (PVA 1000, manufactured by Wako Pure Chemical Industries, Ltd., SP value 32.8 $(J/cm^3)^{1/2}$) used as polymer B were heated at 80°C and stirred to ensure dissolution of the polymers. After lowering the temperature of the system to 55°C, 500 g of ion-exchanged water, which was used as poor solvent, started to be added through a water supply pump at a rate of 0.5 g/min while maintaining an adequately stirred state and stirring the solution at 900 rpm. The dripping rate was gradually increased as the addition was continued, and the addition of the entire quantity was finished in 90 min. The solution turned to white when 100 g of ion-exchanged water had been added. When a half quantity of the ion-exchanged water had been added, the temperature of the solution was raised to 60°C, and subsequently the remaining ion-exchanged water was poured. After finishing the addition of the entire quantity, stirring was continued for additional 30 min. The resulting suspension liquid was cooled to room temperature and filtered, followed by washing with 500 g of ion-exchanged water and vacuum-drying at 80°C for 10 hours to provide 11 g of a white solid material. The resulting powder was observed by scanning electron microscopy and it was found to be fine particles of polyamide with an average particle diameter of 19.5 μm, particle diameter distribution index of 1.17, and sphericity of 98.

○ Particle 2 (Particles produced from "Grilamid (registered trademark)" TR90 used as starting material and having an average particle diameter of 9.2 μm, particle diameter distribution index of 1.46, sphericity of 96, and Tg of 152°C)

(Production method for particle 2: by reference to International Publication WO 2009/142231)

In a 1,000 ml four-neck flask, 2.1 g of amorphous polyamide ("Grilamid (registered trademark)" TR90 manufactured by Emser Werke, Inc., weight average molecular weight 12,300) used as polymer A, 25.8 g of formic acid (manufactured by Wako Pure Chemical Industries, Ltd.) used as organic solvent, and 2.1 g of polyvinyl alcohol ("Gohsenol (registered trademark)" GM-14 manufactured by Nippon Synthetic Chemical Industry Co., Ltd. industry, weight average molecular weight 22,000, SP value 32.8 $(J/cm^3)^{1/2}$) used as polymer B were heated at 80°C and stirred to ensure dissolution of the polymers. After lowering the temperature of the system back to room temperature, 60 g of ion-exchanged water, which was used as poor solvent, started to be added through a water supply pump at a rate of 0.05 g/min while stirring the solution at 900 rpm. The dripping rate was gradually increased as the addition was continued, and the addition of the entire quantity was finished in 90 min. The solution turned to white when 10 g of ion-exchanged water had been added. When a half quantity of the ion-exchanged water had been added, the temperature of the solution was raised to 60°C, and subsequently the remaining ion-exchanged water was poured. After finishing the addition of the entire quantity, stirring was continued for additional 30 min. The resulting suspension liquid was cooled to room temperature and filtered, followed by washing with 50 g of ion-exchanged water and vacuum-drying at 80°C for 10 hours to provide 2.0 g of a white solid material. The resulting powder was observed by scanning electron microscopy and it was found to be fine particles of polyamide with an average particle diameter of 9.2 μm, particle diameter distribution index of 1.46, and sphericity of 96.

○ Particle 3 (Particles produced from "Grilamid (registered trademark)" TR90 used as starting material and having an average particle diameter of 15.3 μm, particle diameter distribution index of 1.77, sphericity of 92, and Tg of 152°C)

(Production method for particle 3: by reference to International Publication WO 2009/142231)

In a 1,000 ml four-neck flask, 2.1 g of amorphous polyamide ("Grilamid (registered trademark") TR90 manufactured by Emser Werke, Inc., weight average molecular weight 12,300) used as polymer A, 25.8 g of formic acid (manufactured by Wako Pure Chemical Industries, Ltd.) used as organic solvent, and 2.1 g of polyvinyl alcohol ("Gohsenol

(registered trademark)" GM-14 manufactured by Nippon Synthetic Chemical Industry Co., Ltd. industry, weight average molecular weight 22,000, SP value 32.8 $(J/cm^3)^{1/2}$) used as polymer B were heated at 80°C and stirred to ensure dissolution of the polymers. After lowering the temperature of the system to 40°C, 60 g of ion-exchanged water, which was used as poor solvent, started to be added through a water supply pump at a rate of 0.05 g/min while stirring the solution at 900 rpm. The dripping rate was gradually increased as the addition was continued, and the addition of the entire quantity was finished in 90 min. The solution turned to white when 10 g of ion-exchanged water had been added. When a half quantity of the ion-exchanged water had been added, the temperature of the solution was raised to 60°C, and subsequently the remaining ion-exchanged water was poured. After finishing the addition of the entire quantity, stirring was continued for additional 30 min. The resulting suspension liquid was cooled to room temperature and filtered, followed by washing with 50 g of ion-exchanged water and vacuum-drying at 80°C for 10 hours to provide 2.0 g of a white solid material. The resulting powder was observed by scanning electron microscopy and it was found to be fine particles of polyamide with an average particle diameter of 15.3 μm, particle diameter distribution index of 1.77, and sphericity of 92.

○ Particle 4 (Particles produced from "Grilamid (registered trademark)" TR55 used as starting material and having an average particle diameter of 16.1 μm, particle diameter distribution index of 1.20, sphericity of 95, and Tg of 160°C)

(Production method for particle 4: by reference to International Publication WO 2009/142231)

In a 1,000 ml four-neck flask, 2.5 g of amorphous polyamide ("Grilamid (registered trademark)" TR55 manufactured by Emser Werke, Inc., weight average molecular weight 18, 000) used as polymer A, 42.5 g of N-methyl-2-pyrolidone used as organic solvent, and 5 g of polyvinyl alcohol ("Gohsenol (registered trademark)" GL-05 manufactured by Nippon Synthetic Chemical Industry Co., Ltd. industry) used as polymer B were heated at 80°C and stirred to ensure dissolution of the polymers. After lowering the temperature of the system back to room temperature, 50 g of ion-exchanged water, which was used as poor solvent, was dropped through a water supply pump at a rate of 0.41 g/min while stirring the solution at 450 rpm. The solution turned to white when 12 g of ion-exchanged water had been added. After finishing the addition of the total quantity of water, stirring was continued for 30 min, and the resulting suspension liquid was filtered, followed by washing with 100 g of ion-exchanged water and vacuum-drying at 80°C for 10 hours to provide 2.2 g of a white solid material. The resulting powder was observed by scanning electron microscopy and found to be fine particles of polyamide with an average particle diameter of 16.1 μm, particle diameter distribution index of 1.20, and sphericity of 95.

<Other resin particles>

○ Particle 5 (particles produced from poly(2, 6-dimethyl phenylene ether) as raw material, average particle diameter 8.6 μm, particle diameter distribution index 1.11, sphericity 97, Tg 215°C)

(Production method for particle 5: by reference to International Publication WO 2009/142231)

In a 1,000 ml four-neck flask, 2.5 g of 2.5 g of poly(2, 6-dimethyl phenylene ether) (weight average molecular weight 55,000) used as polymer A, 45 g of N-methyl-2-pyrolidone used as organic solvent, and 2.5 g of polyvinyl alcohol ("Gohsenol (registered trademark)" GL-05 manufactured by Nippon Synthetic Chemical Industry Co., Ltd. industry) used as polymer B were heated at 80°C and stirred to ensure dissolution of the polymers. After lowering the temperature of the system back to room temperature, 50 g of ion-exchanged water, which was used as poor solvent, was dropped through a water supply pump at a rate of 0.41 g/min while stirring the solution at 450 rpm. The solution turned to white when 12 g of ion-exchanged water had been added. After finishing the addition of the total quantity of water, stirring was continued for 30 min, and the resulting suspension liquid was filtered, followed by washing with 100 g of ion-exchanged water and vacuum-drying at 80°C for 10 hours to provide 2.25 g of a white solid material. The resulting powder was observed by scanning electron microscopy and found to be fine particles of poly(2, 6-dimethyl phenylene ether) with an average particle diameter of 8.6 μm, particle diameter distribution index of 1.11, and sphericity of 97.

○ Particle 6 (Particles produced from "Grilamid (registered trademark)" TR55 manufactured by Emser Werke, Inc., used as starting material, and having an average particle diameter of 18.0 μm, particle diameter distribution index of 1.52, sphericity of 85, and Tg of 160°C)

(Production method for Particle 6)

First, 94 parts by weight of polyamide ("Grilamid (registered trademark)" TR-55 manufactured by Emser Werke, Inc.), which contains 4,4'-diamino-3,3'-dimethyl dicyclohexyl methane as essential component, 4 parts by weight of epoxy resin ("jER (registered trademark)" 828 manufactured by Japan Epoxy Resins Co., Ltd.), and 2 parts by weight of a curing agent ("Tormide (registered trademark)" #296 manufactured by Fuji Kasei Kogyo Co., Ltd.) were added to a mixed solvent composed of 300 parts by weight of chloroform and 100 parts by weight of methanol to provide a uniform solution. Then, using a spray gun for painting, the solution was sprayed strongly against the liquid surface of 3,000 parts by weight of well-stirred n-hexane in order to separate out the solute. The solid material thus separated was filtered out, washed well with n-hexane, vacuum-dried at 100°C for 24 hours, and passed through sieves to remove particles with small diameters and those with large diameters to obtain transparent polyamide particles with a relatively small particle diameter distribution. The resulting powder was observed by scanning electron microscopy and it was found to be fine particles of polyamide with an average particle diameter of 18.0 μm, particle diameter distribution index of 1.52, and sphericity of 85. ○ Particle 7 ("Toraypearl (registered trademark)" TN, manufactured by Toray Industries, Inc., average particle diameter 13.0 μm, particle diameter distribution index 2.10, sphericity 96, Tg 167°C)

○ Particle 8 ("Orgasol (registered trademark)" 1002D, manufactured by Arkema K.K., average particle diameter 20 μm, particle diameter distribution index 1.30, sphericity 97, Tg 53°C)

(1) Measurement of average particle diameter, particle diameter distribution index, and sphericity of resin particles

The particle diameter of individual resin particles was measured by observing the fine particles by scanning electron microscopy (JSM-6301NF scanning electron microscope manufactured by JEOL Ltd.) at a magnification of 1,000. Here, if a particle is not perfectly circular, its major axis was measured and used as its particle diameter.

To determine the average particle diameter, 100 particles in a photograph were randomly selected and their diameters were measured, followed by calculating the arithmetic average. The average particle diameter as referred to herein is the number average particle diameter. The particle diameter distribution index was calculated by the following numeric conversion equation using the diameters of individual particles determined above.

[Equation 3]

$$Dn = \sum_{i=1}^{n} Di \Big/ n$$

$$Dv = \sum_{i=1}^{n} Di^{4} \Big/ \sum_{i=1}^{n} Di^{3}$$

$$PDI = Dv / Dn$$

Here, Di, n, Dn, Dv, and PDI denote the particle diameter of a particular particle, number of measurements (100), number average particle diameter, volume average particle diameter, and particle diameter distribution index, respectively.

The sphericity is determined by measuring the major and minor axes of randomly selected 30 particles in a photograph, and calculating the sphericity by the following equation from the average of the measurements.

[Equation 4]

$$\text{Sphericity} = \frac{\sum_{i=1}^{n} (\text{minor axis} / \text{major axis})}{n} \times 100$$

(2) Measurement of glass transition temperature (Tg) of resin particles

Using differential scanning calorimetry (DSC), resin particles are heated at a heating rate of 20°C/min from 30°C to a temperature 30°C or more higher than an expected glass transition temperature, maintained at the temperature for 1 min, once cooled at a cooling rate of 20°C/min down to 0°C, maintained at the temperature for 1 min, and then heated again at a heating rate of 20°C/min while observing the glass transition temperature (Tg).

Specifically, in the stepwise changing portion of a resulting DSC curve, the glass transition temperature was defined as the temperature at the point where the straight line that is at the same distance in the vertical direction from the extensions of the baselines intersects the curve that changes stepwise due to glass transition. Here, a Model 2910 differential scanning calorimeter manufactured by TA Instruments was used for the measurement.

(3) Preparation of epoxy resin composition

Predetermined amounts of a curing agent, curing accelerator, and non-particle components were put in a kneader according to the compounding ratios specified in Table 1 and heated to 160°C while kneading, followed by kneading at 160°C for 1 hour to provide a transparent viscous liquid. After cooling to 80°C while kneading, curing agent, predetermined amounts of a curing accelerator and particles were added and further kneaded to provide an epoxy resin composition.

(4) Measurement of bending elastic modulus of cured resin

The resin composition prepared in section (3) was deaerated in a vacuum and injected in a mold which was set up so that the thickness would be 2 mm by means of a 2 mm thick "Teflon (trademark)" spacer. Curing was performed at a temperature of 180°C for 2 hours to provide a cured resin with a thickness of 2 mm. Then, the resulting cured resin plate was cut to prepare a test piece with a width of 10 mm and length of 60 mm, and it was subjected to three-point bending test with a span of 32 mm, followed by calculation of the bending elastic modulus according to JIS K7171-1994.

(5) Measurement of toughness (KIC) of cured resin

The resin composition prepared in section (3) was deaerated in a vacuum and injected in a mold which was set up so that the thickness would be 6 mm by means of a 6 mm thick "Teflon (trademark)" spacer, followed by curing at a temperature of 180°C for 2 hours to provide a cured resin with a thickness of 6 mm. This a cured resin was cut to prepare a test piece with a size of 12.7 × 150 mm. Using an Instron type universal tester (manufactured by Instron Corporation), test piece was processed and tested according to ASTM D5045 (1999). An initial precrack was introduced in the test piece by putting the edge of a blade cooled to the liquid nitrogen temperature on the test piece and giving an impact to the razor using a hammer. The toughness of a cured resin as referred to herein means the critical stress intensity factor for mode I (opening-mode) deformation.

(6) Preparation of prepreg

An epoxy resin composition was spread over a piece of release paper with a knife coater to prepare a resin film. Then, carbon fibers of "Torayca (registered trademark)" T800G-24K-31E manufactured by Toray Industries, Inc. was paralleled in one direction to form a sheet, and two resin films were used to cover both sides of the carbon fiber sheet and pressed under heat to impregnate the carbon fibers with the resin to provide a unidirectional prepreg with a carbon fiber basis weight of 190 g/$m^2$ and matrix resin weight fraction of 35.5%. In doing this, two-step impregnation was carried out to produce a prepreg in which resin particles are extremely localized near the surface.

To provide a resin film for primary prepreg production, an epoxy resin composition containing no resin particles and having the same constitution as specified in Table 1 except for resin particles was prepared by the same procedure as specified in section (3). This epoxy resin composition was spread over a piece of release paper with a knife coater

to provide a resin film with a basis weight of 30 g/m$^2$, which corresponds to 60 mass% of the normal value. Then, carbon fibers of "Torayca (registered trademark)" T800G-24K-31E manufactured by Toray Industries, Inc. was paralleled in one direction to form a sheet, and two resin films were used to cover both sides of the carbon fiber sheet and pressed under heat using heating rollers at a temperature of 100°C and an air pressure of 1 atm to impregnate the carbon fibers with the resin to provide a primary prepreg.

To provide a resin film for two-step impregnation, an epoxy resin composition containing resin particles at a proportion (in parts by mass) as given in Table 2 relative to the total epoxy resin component (100 parts by mass) and having the same constitution as specified in Table 1 for the components other than the resin particles was prepared by the same procedure as specified in section (3). This epoxy resin composition was spread over a piece of release paper with a knife coater to provide a resin film with a basis weight of 20 g/m$^2$, which corresponds to 40 mass% of the normal value. Such films were used to sandwich the primary prepreg and pressed under heat using heating rollers at a temperature of 80°C and an air pressure of 1 atm to provide a prepreg in which resin particles are extremely localized near the surface. The use of this two-step impregnation process serves to produce a prepreg in which resin particles are extremely localized near the surface although as a whole the epoxy resin composition constituting the prepreg contains the same quantity of resin particles as that specified in the particle content list in Table 1.

(7) Proportion of particles existing in the region with a depth equal to 20% of the prepreg thickness

The unidirectional prepreg prepared in section (4) is interposed between two polytetrafluoroethylene resin plates with smooth surfaces and brought into close contact, then the temperature is increased gradually for 7 days up to 150°C to ensure gelation and curing, thus producing a plate-like cured resin. After the completion of curing, the cured body was cut in a direction perpendicular to the contact interface, and the cross section was polished and photographed with an optical microscope at a magnification of 200 or more in such a manner that the upper and lower surfaces of the prepreg were included in the field of view. According to the same procedure, the distance between the polytetrafluoroethylene resin plates was measured at five points aligned in the lateral direction in the cross-sectional photograph, and the average (n=5) was assumed to represent the thickness of the prepreg. For each of the two surfaces of the prepreg, a line parallel to the surface of the prepreg was drawn at a depth equal to 20% of the thickness. Then, the total area of the particles existing between each surface of the prepreg and each of the lines drawn above and the total area of the particles existing across the entire thickness of the prepreg were determined, followed by calculating the proportion of the number of particles existing in the regions of 20% depth from the prepreg surfaces to the total number of particles existing across the entire (100%) thickness of the prepreg. Here, the total area of the fine particles was determined by cutting the particle portions out of the cross-sectional photograph and converting their mass.

(8) Preparation of composite material plate for mode I interlaminar toughness (GIC) test and implementation of GIC measurement

According to the following procedure from (a) to (e), composite material plates for mode I interlaminar toughness (GIC) were test prepared according to JIS K7086 (1993).

(a) A total of 20 unidirectional prepreg plies as prepared in section (6) were laminated together with their fibers aligned in one direction. A fluorine resin film with a width of 40 mm and a thickness of 50 μm was interposed at the center of the laminate (between the 10th and the 11th ply) in such a manner that its direction was perpendicular to the fibers.
(b) The laminated prepreg plies were covered with a nylon film without leaving gaps, and cured by pressing under heat in an autoclave at 180°C and internal pressure of 0.59 MPa for 2 hours to form a unidirectional fiber-reinforced composite material.
(c) The unidirectional fiber-reinforced composite material obtained in step (b) was cut to a width of 20 mm and a length of 195 mm. Cutting was performed so that the fibers were parallel to the length direction of the specimen.
(d) According to JIS K7086 (1993), a block (aluminum, length 25mm) for pin load application was attached to an end (where the film was located) of the specimen.
(e) White paint was applied to both side faces of the specimen to ensure easy observation of the progress of cracking.

The composite material plate prepared above was used to make GIC measurements by the following procedure.

Test was carried out using an Instron type universal tester (manufactured by Instron Corporation) according to Appendix 1 of JIS K7086 (1993). The crosshead speed was 0.5 mm/min before the length of the crack reached 20 mm and 1 mm/min after it reached 20 mm. The GIC (GIC at the initial point of cracking) that corresponds to the critical load at the initial point of cracking was calculated from the load, displacement, and crack length according to JIS K7086 (1993).

(9) Measurement of mode II interlaminar toughness (GIIC)

The specimen preparation procedure described in steps (a) to (c) for GIC test in section (8) was carried out to provide a specimen with a width of 20 mm and a length of 195 mm. This specimen was subjected to ENF test according to Appendix 2 of JIS K7086 (1993).

(10) Measurement of compressive strength under heat and humidity conditions of fiber-reinforced composite material

A total of 12 unidirectional prepreg plies prepared in section (6) were laminated with their fibers aligned parallel to the compression direction and heated in an autoclave for 2 hours at a temperature of 180°C, a pressure of 0.59 MPa and a heating rate of 1.5°C/min to provide a laminate body. From this laminate body, a tabbed specimen with a thickness of 2 mm, width of 15 mm, and length 78 mm was prepared and immersed in warm water at 71°C for 14 days. This specimen was subjected to 0°compressive strength measurement at 82°C using a universal tester equipped with a temperature controlled bath according to JIS K7076 (1991). Five specimens were prepared (n=5).

(11) Measurement of interlayer thickness of fiber-reinforced composite material

A total of 20 unidirectional prepreg plies as prepared in section (4) were laminated with their fibers aligned in one direction. The laminated prepreg plies were covered with a nylon film without leaving gaps, and cured by pressing under heat in an autoclave at 180°C and internal pressure of 0.59 MPa for 2 hours to form a unidirectional fiber-reinforced composite material. This was cut in a direction perpendicular to the carbon fibers, and the cross section was polished and photographed with an optical microscope at a magnification of 200 or more. In an appropriately-selected region between fiber layers in the photograph, a line parallel to the carbon fiber layers was drawn so that it represented a carbon fiber volume content of 50%, and it was assumed to be a boundary line between the internal region of the fiber layer and the interlayer region between the fiber layers. A boundary line averaged over a length of 100 μm was drawn, and the distance between them was assumed to represent the interlayer thickness. The same procedure was carried out for five appropriately selected interlayer regions, and the average was adopted.

(Example 1)

Using a kneader, the procedure specified in section (3) was carried out according to the compounding ratios given in Table 1 to prepare an epoxy resin composition for fiber-reinforced composite material production. For the resulting epoxy resin composition, the procedures specified in section (4) "Measurement of bending elastic modulus of cured resin" and (5) "Measurement of toughness (KIC) of cured resin" to determine its bending elastic modulus and KIC. Elsewhere, the procedure specified in section (6) was carried out to produce a prepreg in which particle 1 was extremely localized near the surface. Using the resulting prepreg, the measurement procedures specified in section (7) "Proportion of particles existing in the region with a depth equal to 20% of the prepreg thickness", section (8) "Preparation of composite material plate for mode I interlaminar toughness (GIC) test and implementation of GIC measurement", section (9) "Measurement of mode II interlaminar toughness (GIIC)", section (10) "Measurement of compressive strength under heat and humidity conditions of fiber-reinforced composite material", and section (11) "Measurement of interlayer thickness of fiber-reinforced composite material" were carried out.

Results are given in Table 1.

[Table 1]

[Table 1]

| | | Examples | | | | | | | | | | Comparative examples | | | | | |
|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 |
| Components other than resin particles | Epoxy resin [A] | | | | | | | | | | | | | | | | |
| | ○ELM434 | | 60 | 60 | 50 | 50 | 50 | 10 | 60 | 50 | 10 | 50 | 50 | 50 | 50 | 50 | 10 |
| | ○jER630 | | | | | | | | | | | | | | | | |
| | ○MY0600 | | | | | | | 70 | | | 70 | | | | | | 70 |
| | ○GAN | | 30 | | | | | | 30 | | | | | | | | |
| | ○GOT | | | 30 | 25 | 25 | 25 | | | 25 | | 25 | 25 | 25 | 25 | 25 | |
| | ○jER828 | 60 | | | | | | | | | | | | | | | |
| | ○EPICLON 830 | | 10 | 10 | | | | 20 | 10 | | 20 | | | | | | 20 |
| | ○EPICLON HP7200H | 40 | | | 25 | 25 | 25 | | | 25 | | 25 | 25 | 25 | 25 | 25 | |
| | Elastomer component [C] | | | | | | | | | | | | | | | | |
| | ○block copolymer M22N | 8 | | | | | | | | | | | | | | | |
| | ○block copolymer SM4032XM10 | | 5 | | 5 | 5 | 5 | | | 5 | | | 5 | 5 | 5 | 5 | |
| | ○core shell rubber particles MX416 | | | 5 | | | | 5 | 5 | | 5 | | | | | | |
| | Epoxy resin curing agent [D] | | | | | | | | | | | | | | | | |
| | ○Seikacure-S | | | 40 | | | | | | | | | | | | | |
| | ○3,3'-DAS | 40 | 40 | | 40 | 40 | 40 | 40 | 40 | 40 | 40 | 40 | 40 | 40 | 40 | 40 | 40 |

(continued)

| | | Examples | | | | | | | | | | Comparative examples | | | | | |
|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 |
| | Other component | | | | | | | | | | | | | | | | |
| | ○SnmikaAVrAI PFCS5003P | | | 10 | | | | 15 | | | | | | | | | 15 |
| Resin particles | Resin particles [B] | | | | | | | | | | | | | | | | |
| | ○particles 1 | 20 | 20 | 20 | 20 | | | 20 | 20 | | 20 | 20 | | | | | 20 |
| | ○particles 2 | | | | | 20 | | | | | | | | | | | |
| | ○particles 3 | | | | | | 20 | | | | | | | | | | |
| | ○particles 4 | | | | | | | | | 20 | | | | | | | |
| | Other resin particles | | | | | | | | | | | | | | | | |
| | ○particles 5 | | | | | | | | | | | | 20 | | | | |
| | ○particles 6 | | | | | | | | | | | | | 20 | | | |
| | ○particles 7 | | | | | | | | | | | | | | 20 | | |
| | ○particles 8 | | | | | | | | | | | | | | | 20 | |
| Particle content in total components (mass%) | | 11.9 | 12.1 | 11.4 | 12.1 | 12.1 | 12.1 | 11.1 | 12.1 | 12.1 | 12.1 | 12.5 | 12.1 | 12.1 | 12.1 | 12.1 | 11.4 |
| Characteristics of cured resin | | | | | | | | | | | | | | | | | |
| ○bending elastic modulus (MPa) | | 3.5 | 3.8 | 3.4 | 3.9 | 3.9 | 3.9 | 4.0 | 3.7 | 3.9 | 4.1 | 4.0 | 4.0 | 3.9 | 3.9 | 3.8 | 4.2 |
| ○$K_{IC}$ ($MPa \cdot m^{0.5}$) | | 1.5 | 1.0 | 0.9 | 1.2 | 1.1 | 1.1 | 1.0 | 1.0 | 1.0 | 0.9 | 0.7 | 0.9 | 1.1 | 1.0 | 1.1 | 0.6 |
| Characteristics of fiber-reinforced composite material | | | | | | | | | | | | | | | | | |
| ○interlaminar toughness $G_{IC}$ ($J/m^2$) | | 770 | 680 | 630 | 790 | 710 | 660 | 650 | 660 | 610 | 650 | 490 | 390 | 440 | 560 | 620 | 460 |
| ○interlaminar toughness $G_{IIC}$ ($J/m^2$) | | 3300 | 3700 | 3400 | 3500 | 3300 | 3100 | 3200 | 3600 | 3300 | 3200 | 2900 | 2500 | 2300 | 2900 | 2800 | 2700 |

(continued)

| | Examples | | | | | | | | | | Comparative examples | | | | | |
|---|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 | 6 |
| ○open-hole compressive strength under heat and humidity conditions (MPa) | 1010 | 1140 | 1020 | 1160 | 1110 | 1100 | 1060 | 1120 | 1090 | 1000 | 1180 | 1130 | 920 | 1070 | 970 | 980 |
| ○interlayer thickness (μm) | 32 | 34 | 33 | 35 | 31 | 29 | 33 | 34 | 34 | 33 | 33 | 25 | 26 | 23 | 27 | 32 |

The basis weight resin of the film, particle content, and proportion of particles existing in the region with a depth equal to 20% of the prepreg thickness are given in Table 2.

[Table 2]

[Table 2]

| | Resin film for primary prepreg | | | Resin film for two-step impregnation | | | | | Prepreg | |
|---|---|---|---|---|---|---|---|---|---|---|
| | Components other than resin particles | Resin particles | Basis weight of film | Components other than resin particles | Resin particles | Content of resin particles | | Basis weight of film | Content of resin particles*1 | Proportion of particles localized near surface *2 |
| | | | ($g/m^2$) | | | (parts by mass) | (mass%) | ($g/m^2$) | (mass%) | (%) |
| Production example 1 | Example 1 | none | 30 | Example 1 | particle 1 | 62.7 | 29.8 | 20 | 11.9 | 97 |
| Production example 2 | Example 2 | none | 30 | Example 2 | particle 1 | 63.0 | 30.3 | 20 | 12.1 | 98 |
| Production example 3 | Example 3 | none | 30 | Example 3 | particle 1 | 63.0 | 30.3 | 20 | 12.1 | 97 |
| Production example 4 | Example 4 | none | 30 | Example 4 | particle 1 | 63.0 | 30.3 | 20 | 12.1 | 98 |
| Production example 5 | Example 5 | none | 30 | Example 5 | particle 2 | 63.0 | 30.3 | 20 | 12.1 | 95 |
| Production example 6 | Example 6 | none | 30 | Example 6 | particle 3 | 63.0 | 30.3 | 20 | 12.1 | 94 |
| Production example 7 | Example 7 | none | 30 | Example 7 | particle 4 | 63.0 | 30.3 | 20 | 12.1 | 97 |
| Production example 8 | Example 8 | none | 30 | Example 8 | particle 1 | 63.0 | 30.3 | 20 | 12.1 | 96 |
| Compative production example 1 | Comparative example 1 | none | 30 | Comparative example 1 | particle 1 | 63.6 | 31.3 | 20 | 12.5 | 98 |
| Compative production example 2 | Comparative example 2 | none | 30 | Comparative example 2 | particle 5 | 63.0 | 30.3 | 20 | 12.1 | 91 |

(continued)

| | Resin film for primary prepreg | | | Resin film for two-step impregnation | | | | | Prepreg | |
|---|---|---|---|---|---|---|---|---|---|---|
| | Components other than resin particles | Resin particles | Basis weight of film | Components other than resin particles | Resin particles | Content of resin particles | | Basis weight of film | Content of resin particles*1 | Proportion of particles localized near surface *2 |
| | | | ($g/m^2$) | | | (parts by mass) | (mass%) | ($g/m^2$) | (mass%) | (%) |
| Compative production example 3 | Comparative example 3 | none | 30 | Comparative example 3 | particle 6 | 63.0 | 30.3 | 20 | 12.1 | 96 |
| Compative production example 4 | Comparative example 4 | none | 30 | Comparative example 4 | particle 7 | 63.0 | 30.3 | 20 | 12.1 | 93 |
| Compative production example 5 | Comparative example 5 | none | 30 | Comparative example 5 | particle 8 | 63.0 | 30.3 | 20 | 12.1 | 96 |
| Compative production example 6 | Comparative example 6 | none | 30 | Comparative example 6 | particle 1 | 61.8 | 28.5 | 20 | 12.1 | 97 |

*1 content of resin particles in total resin components in prepreg
*2 proportion of particles localized in 20% depth region from prepreg surface

The prepreg had been impregnated appropriately and had good surface quality, and the proportion of particles existing in the 20% depth region was a high 97%, showing that resin particles were localized near the surface in the prepreg. Results show that the fiber-reinforced composite material had a high GIC and GIIC as well as an allowable compressive strength under heat and humidity conditions.

(Examples 2-10)

Except for using the compounding ratios specified in Table 1, the same procedure as in Example 1 was carried out to provide epoxy resin compositions and prepregs. Particles were localized adequately near the surface and the interlayer thicknesses were adequately large, suggesting that the fiber-reinforced composite materials had satisfactory values of GIC, GIIC and compressive strength under heat and humidity conditions.

(Comparative example 1)

Except for using the compounding ratios specified in Table 1, the same procedure as in Example 1 was carried out to provide an epoxy resin composition and prepreg. Being free of elastomer component [C], the resulting cured resin was low in toughness and the fiber-reinforced composite material was particularly low in GIC.

(Comparative examples 2 to 5)

Except for using particles unable to work as resin particles [B], the same procedure as in Example 4 was carried out to provide epoxy resin compositions and prepregs. These particles did not meet the requirements of (b1) to (b3) and could not have satisfactory values for all GIC, GIIC and compressive strength under heat and humidity conditions.

(Comparative example 6)

Except for using the compounding ratios specified in Table 1, the same procedure as in Example 1 was carried out to provide an epoxy resin composition and prepreg. Due to the addition of polyethersulfone instead of component [C], the resulting cured resin was low in toughness and the fiber-reinforced composite material was particularly low in GIC.

[Industrial applicability]

According to the present invention, it is possible to provide fiber-reinforced composite materials having a high mode I interlaminar toughness, high mode II interlaminar toughness, and high compression strength under heat and humidity conditions, and they can serve effectively for production of structural members. Their preferred applications in the aerospace industry include, for instance, primary structural members of aircraft such as main wing, tail unit, and floor beam; secondary structural members such as flap, aileron, cowl, fairing, and other interior materials, and structural members of artificial satellites such as rocket motor case. Their preferred applications for general industrial uses include structural members of vehicles such as automobile, ship, and railroad vehicle; and civil engineering and construction materials such as drive shaft, plate spring, windmill blade, various turbines, pressure vessel, flywheel, roller for paper manufacture, roofing material, cable, reinforcing bar, and mending/reinforcing materials. Applications in the sporting goods industry include golf shaft, fishing pole, rackets for tennis, badminton, squash, etc., hockey stick, and skiing pole.

## Claims

**1.** Epoxy resin composition for fiber-reinforced composite material production, comprising at least components [A], [B], [C], and [D] listed below:

[A] epoxy resin,
[B] resin particles insoluble in epoxy resin and meeting the following requirements from (b1) to (b3):

(b1) the particles have a diameter distribution index of 1.0 to 1.8,
(b2) the particles have a sphericity of 90 or more, and
(b3) the particles have a glass transition temperature of 80 to 180°C,

[C] at least one elastomer component selected from the group consisting of rubber particles and block copolymers containing a block with a glass transition temperature of 20°C or less, and

[D] epoxy resin curing agent.

2. Epoxy resin composition for fiber-reinforced composite material production as claimed in claim 1, wherein resin particles [B] are particles of polyamide having a chemical structure as represented by general formula (1):

[Chemical compound 1]

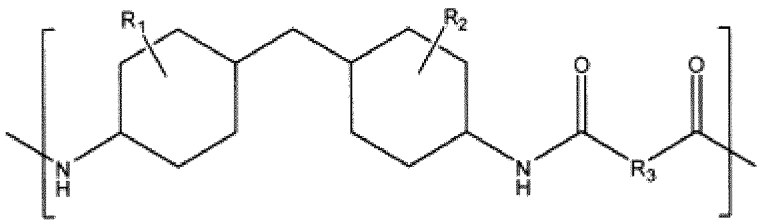

(1)

where $R_1$ and $R_2$ represent a hydrogen atom, an alkyl group containing 1 to 8 carbon atoms, or a halogen atom, and may be either identical to or different from each other, and where $R_3$ represents a methylene group containing 1 to 20 carbon atoms, or a phenylene group.

3. Epoxy resin composition for fiber-reinforced composite material production as claimed in either claim 1 or 2 wherein the average particle diameter of resin particles (B) is 8 to 35 μm.

4. Epoxy resin composition for fiber-reinforced composite material production as claimed in any of claims 1 to 3 wherein elastomer component [C] is at least one block copolymer selected from the group consisting of copolymers having a structure of S-B-M, B-M, or M-B-M,
(where each of the blocks is connected to an adjacent one via a covalent bond, or via an intermediary molecule that is connected to the block via a covalent bond and connected to the adjacent one via another covalent bond; block M comprises a homopolymer of polymethyl methacrylate or a copolymer in which at least 50 wt% is accounted for by methyl methacrylate; and block B is incompatible with block M and has a glass transition temperature of 20°C or less; and block S is incompatible with blocks B and M and has a glass transition temperature that is higher than the glass transition temperature of block B.)

5. Epoxy resin composition for fiber-reinforced composite material production as claimed in any of claims 1 to 4 wherein component [A] comprises polyfunctional amine type epoxy resin.

6. Epoxy resin composition for fiber-reinforced composite material production as claimed in any of claims 1 to 5 wherein component [A] comprises bifunctional amine type epoxy resin.

7. Epoxy resin composition for fiber-reinforced composite material production as claimed in any of claims 1 to 6 wherein component [D] is aromatic polyamine.

8. Epoxy resin composition for fiber-reinforced composite material production as claimed in any of claims 1 to 7 wherein component [D] is diaminodiphenyl sulfone, or a derivative thereof, or an isomer thereof.

9. Prepreg produced by impregnating reinforcement fibers with epoxy resin composition for fiber-reinforced composite material production as claimed in any of claims 1 to 8.

10. Prepreg as claimed in claim 9 wherein component [B] is distributed more densely near the surface than in the interior.

11. Prepreg as claimed in either claim 9 or 10 wherein 90% or more of component [B] is localized in a region with a depth from the prepreg surface equal to 20% of the prepreg thickness.

12. Prepreg as claimed in any of claim 9 to 11 wherein the reinforcement fibers are carbon fibers.

13. Fiber-reinforced composite material produced by curing a prepreg as claimed in any of claims 9 to 12.

14. Fiber-reinforced composite material comprising reinforcement fibers and epoxy resin composition for fiber-reinforced composite material production as claimed in claims 1 to 8.

## INTERNATIONAL SEARCH REPORT

International application No.
PCT/JP2012/051189

A. CLASSIFICATION OF SUBJECT MATTER
*C08L63/00*(2006.01)i, *C08J5/24*(2006.01)i, *C08L21/00*(2006.01)i, *C08L77/00*(2006.01)i

According to International Patent Classification (IPC) or to both national classification and IPC

B. FIELDS SEARCHED

Minimum documentation searched (classification system followed by classification symbols)
C08L63/00, C08J5/24, C08L21/00, C08L77/00, C08G59/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-031197 A (Toray Industries, Inc.), 12 February 2010 (12.02.2010), claims; paragraphs [0006], [0011], [0024], [0025], [0049], [0058] to [0062], [0065], [0068], [0069], [0074], [0084], [0089], [0096], [0097], [0105] to [0111]; fig. 1 (Family: none) | 1-14 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 March, 2012 (15.03.12) | Date of mailing of the international search report<br>27 March, 2012 (27.03.12) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No.
PCT/JP2012/051189

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/142231 A1 (Toray Industries, Inc.), 26 November 2009 (26.11.2009), claims; paragraphs [0003], [0024], [0025], [0042] to [0044], [0089], [0113], [0145], [0224], [0229], [0240]<br>& JP 2010-1448 A & US 2011/0070442 A1<br>& EP 2287236 A1 & EP 2189487 A1<br>& AU 2009250453 A & CN 102099400 A<br>& AU 2008287961 A & KR 10-2010-0040965 A<br>& CN 101848956 A & KR 10-2011-0029126 A | 1-14 |
| Y | WO 2008/001705 A1 (Toray Industries, Inc.), 03 January 2008 (03.01.2008), claims; paragraphs [0003], [0004], [0006], [0007], [0025] to [0028], [0062], [0066], [0090], [0102] to [0105]<br>& US 2009/0198012 A1 & EP 2036950 A1<br>& KR 10-2009-0024825 A & CN 101501132 A | 1-14 |
| Y | JP 2008-189794 A (Toray Industries, Inc.), 21 August 2008 (21.08.2008), claims; paragraphs [0003] to [0005], [0008] to [0010], [0013]<br>(Family: none) | 1-14 |
| Y | JP 2003-535181 A (Atofina), 25 November 2003 (25.11.2003), claims; paragraphs [0001], [0007], [0014], [0020] to [0023], [0026], [0030] to [0032]<br>& US 2004/0034124 A1 & EP 1290088 A1<br>& WO 2001/092415 A1 & FR 2809741 A<br>& AU 6244601 A & CA 2410674 A<br>& CN 1441830 A | 1-14 |
| A | JP 63-162732 A (Toray Industries, Inc.), 06 July 1988 (06.07.1988), claims; page 2, upper right column, lines 2 to 7; page 2, lower left column, lines 1 to 8; page 5, lower right column, line 17 to page 6, upper left column, line 2; page 6, upper right column, line 3 to page 7, upper left column, line 7; page 7, upper right column, lines 6 to 15; page 7, lower left column, line 19 to lower right column, line 8; page 8, lower left column, line 14 to lower right column, line 15; examples<br>& US 5789073 A | 1-14 |
| A | JP 2004-2731 A (Osaka-Fu, Sumitomo Bakelite Co., Ltd.), 08 January 2004 (08.01.2004), claims; paragraphs [0005] to [0007], [0034], [0040]<br>(Family: none) | 1-14 |

Form PCT/ISA/210 (continuation of second sheet) (July 2009)

**INTERNATIONAL SEARCH REPORT**

International application No.
PCT/JP2012/051189

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-114981 A (Ibiden Co., Ltd.), 24 April 2001 (24.04.2001), claims; paragraph [0028]; fig. 1 to 10 & JP 7-33991 A & US 5994480 A & US 6124408 A & EP 612812 A2 | 1-14 |
| P,A | JP 2011-162619 A (Toray Industries, Inc.), 25 August 2011 (25.08.2011), claims; paragraphs [0107], [0108] (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5028478 A
- JP 2010095557 A
- JP 2010525102 W
- EP 524054 A
- EP 749987 A
- JP HEI126651 B
- JP SHO63170427 B
- JP SHO63170428 B

### Non-patent literature cited in the description

- *Polym. Eng. Sci.,* 1974, vol. 14 (2), 147-154